# EUROPÄISCHE PATENTANMELDUNG

(11) **EP 2 710 906 A1**
(43) Veröffentlichungstag der Anmeldung: **26.03.2014**
(21) Anmeldenummer: 13184788.1
(22) Anmeldetag: 17.09.2013
(51) Int. Cl.: A23L 1/302, A23L 1/304, A23L 2/52, A23L 2/60, A23L 1/30

(54) **Sportgetränk mit kurz- und langkettigen Kohlenhydratkomponenten**

(30) Priorität: 20.09.2012 DE 102012108843
(71) Anmelder: PM-International AG, 1618 Luxembourg (LU)
(72) Erfinder: Sorg, Rolf, 5444 Schengen (LU); Kühne, Dr. Tobias, 54497 Morbach (DE); Lauinger, Christian, 76275 Ettlingen (DE); Iken, Dr. Marcus, 67105 Schifferstadt (DE); Messer, Wilhelm, 67098 Bad Dürkheim (DE)
(74) Vertreter: Zech, Stefan Markus

(57) **Zusammenfassung**

Die Erfindung betrifft ein Sportgetränk, umfassend mindestens eine erste kurzkettige Kohlenhydratkomponente zur schnellen Resorption, insbesondere im Dünndarm, zur schnellen Regeneration und Energiebereitstellung während der sportlichen Betätigung, und mindestens eine langkettige Kohlenhydratkomponente zur verzögerten Bereitstellung und Resorption mindestens einer zweiten kurzkettigen Kohlenhydratkomponente, insbesondere im Dickdarm.

## Beschreibung

Die Erfindung betrifft ein Sportgetränk bzw. ein Pulver oder Konzentrat zum Anrühren eines solchen.

Derartige Sportgetränke sind im Stand der Technik bereits bekannt. Beispielsweise die DE 202 16 946 U1 beschreibt ein Fruchtsaftgetränk mit Holundersaft, Cranberrysaft, Süßmolkepulver und Carnitin. Als Kohlenhydratlieferanten wird Fructose, Dextrose und Matrodextrin vorgeschlagen. Insgesamt wird die Kohlenhydrataufnahme bei einer Zusammensetzung und Darreichungsform gemäß dem Stand der Technik als unbefriedigend empfunden.

Es ist daher Aufgabe der Erfindung, die Energieaufnahme durch den Körper des Sportlers weiter zu verbessern und insbesondere eine schonende Kohlenhydratversorgung zu ermöglichen.

Diese Aufgabe wird durch ein Sportgetränk oder ein Pulver bzw. Konzentrat zum Anrühren eines solchen gemäß Anspruch 1 gelöst.

Insbesondere wird die Aufgabe durch ein Sportgetränk gelöst, umfassend mindestens eine erste kurzkettige Kohlenhydratkomponente zur schnellen Resorption, insbesondere im Dünndarm, zur schnellen Regeneration und Energiebereitstellung während der sportlichen Betätigung, und mindestens eine langkettige Kohlenhydratkomponente zur verzögerten Bereitstellung und Resorption mindestens einer zweiten kurzkettigen Kohlenhydratkomponente, insbesondere im Dickdarm.

Ein Kerngedanke der Erfindung liegt darin, sowohl mindestens eine kurzkettige (erste) Kohlenhydratkomponente zur Verfügung zu stellen als auch mindestens eine langkettige Kohlenhydratkomponente. Dabei sind kurzkettige und langkettige Kohlenhydratkomponenten derart aufeinander abgestimmt und aufbereitet, dass die (erste) kurzkettige Kohlenhydratkomponente vergleichsweise schnell (im Dünndarm) aufgenommen wird und die zweite kurzkettige Kohlenhydratkomponente, die durch Aufspaltung der langkettigen Kohlenhydratkomponente im Körper generiert wird, vergleichsweise spät (im Dickdarm). Durch ein derartiges Sportgetränk wird im Körper vergleichsweise viel Energie gleichzeitig zur Verfügung gestellt. Dies geschieht dadurch, dass verschiedene Aufnahmeorte für Kohlenhydrate genutzt werden. Insgesamt kann der Körper damit pro Zeiteinheit mehr Monosaccharide aufnehmen. Diese Monosaccharide werden vom Körper wiederum als Energieträger verwendet.

Vorzugsweise ist ein Verhältnis des Gesamtgewichts der einen oder der mehreren ersten kurzkettigen Kohlenhydratkomponenten zu dem Gesamtgewicht der einen oder der mehreren langkettigen Kohlenhydratkomponenten 1:100 bis 1:10, vorzugsweise 1:40 bis 1:60, insbesondere (etwa) 1:50. Durch den vergleichsweise geringen Anteil der langkettigen Kohlenhydratkomponente wird insgesamt erreicht, dass durch die kurzkettige Kohlenhydratkomponente viel Energie zur Verfügung gestellt werden kann und durch die langkettige Kohlenhydratkomponente noch ein gewisses Plus erreicht wird, dass die Leistungsfähigkeit des Sportlers insgesamt nochmals erhöht. Weiterhin wird erreicht, dass durch den hohen Anteil der kurzkettigen Kohlenhydratkomponenten die langkettige Kohlenhydratkomponente verzögert (in aufgespaltener Form) resorbiert wird. Weiterhin wird durch den vergleichsweise geringen Anteil der langkettigen Kohlenhydratkomponente auch erreicht, dass der Körper insbesondere während der sportlichen Betätigung nicht allzu sehr belastet wird. Durch das vorgeschlagene Verhältnis wird insgesamt erreicht, dass zwei grundsätzlich verschiedene Anforderungen, nämlich eine möglichst ausgewogene Nährstoffaufnahme und eine möglichst schnelle Nährstoffaufnahme, auf optimale Weise Rechnung getragen werden.

Erste und zweite kurzkettige Kohlenhydratkomponente sind vorzugsweise identisch. Dadurch wird ganz gezielt ein spezielles Monomer (beispielsweise Glucose) einerseits vergleichsweise schnell und andererseits zeitverzögert zugeführt. Damit kann ganz der Körper gezielt mit Energie versorgt werden. Insgesamt wird die Energieaufnahme auf schonende Weise verbessert. Ein Verhältnis des Gewichts der ersten kurzkettigen Kohlenhydratkomponente (z.B. Glucose) zu dem Gewicht einer langkettigen Kohlenhydratkomponente (z.B. Malodextrin), durch die eine zur ersten Komponente identische zweite Kohlenhydratkomponente bereitgestellt wird, beträgt vorzugsweise 1:5 bis 1:40, weiter vorzugsweise 1:15 bis 1:25, insbesondere (etwa) 1:20. Insgesamt ist das Gewicht der langkettigen Kohlenhydratkomponente bei dieser Weiterbildung deutlich geringer als das Gewicht der ersten kurzkettigen Kohlenhydratkomponente.

In besonderen Ausführungsformen ist das Sportgetränk zur Aufnahme in einer ersten Phase vor der sportlichen Betätigung, in einer zweiten Phase während der sportlichen Betätigung und in einer dritten Phase nach der sportlichen Betätigung, vorgesehen. Das Sportgetränk gemäß dieser Ausführungsform umfasst eine Vielzahl von Mineralien und ggf. Vitamin, sowie mindestens ein immunsystemunterstützendes Mittel, insbesondere mindestens ein Antioxidationsmittel zur Resorption während der ersten und dritten Phase und mindestens ein Kohlenhydrat zur Resorption insbesondere während der zweiten Phase sowie mindestens einen Kohlenhydratresorptionsverstärker zur Steigerung der Kohlenhydratresorption. Ein Kerngedanke dieser Ausführungsform liegt darin, ein Drei-Phasen-Sportgetränk bereitzustellen, das sich dadurch auszeichnet, dass in allen drei Phasen einer sportlichen Betätigung (vor, während und nach der sportlichen Betätigung) durch eine spezielle Wirkstoffzusammensetzung ein hoher Wirkungsgrad erzielt wird. Dabei wird gleichzeitig eine hohe Leistung des Sportlers ermöglicht sowie eine schnelle Regeneration. Es wurde erkannt, dass schon die Phase vor der sportlichen Betätigung besonders wichtig ist. Weiter wurde erkannt, dass der menschliche Körper während der sportlichen Betätigung weniger (bis keine) Mineralstoffe und Vitamine resorbiert (auch wenn diese zur Verfügung gestellt werden), jedoch Kohlenhydrate. Beim vorliegenden Sportgetränk dienen daher die vorgeschlagenen Mineralien auch weniger der Zufuhr der zweiten Phase, sondern vielmehr dem Auffüllen des Mineralstoffvorrats im Körper während der ersten und dritten Phase.

Vorzugsweise umfasst das Sportgetränk weiterhin einen Sauerstoffaufnahmeverstärker, insbesondere ein Algenpulver, zur Verbesserung der Sauerstoffaufnahme. Das Algenpulver (allgemein Algensubstanz) kann Braunalgen oder Braunalgenextrakte umfassen. Durch den Sauerstoffaufnahmeverstärker (z.B. Algensubstanz) kann der Sauerstoff-Antransport im menschlichen Zellsystem verbessert werden. Zellbarrieren werden besser durchdrungen, so dass den Zellen mehr Sauerstoff zugeführt werden kann. Der Sauerstoffaufnahmeverstärker (insbesondere die Algensubstanz) beträgt vorzugsweise mindestens 0,0001 Gew.-%, weiter vorzugsweise mindestens 0,001 Gew.-%, noch weiter vorzugsweise mindestens 0,01 Gew.-%. Eine Obergrenze beträgt vorzugsweise 2 Gew.-%, weiter vorzugsweise 1 Gew.-%, noch weiter vorzugsweise 0,5 Gew.-%. Ohne gegenteilige Angaben sind hier und im Folgenden Prozentangaben stets Gew.-%-Angaben ohne Berücksichtigung von Wasser. Diese Weiterbildung zeichnet sich durch eine synergistische Wirkung zusammen mit dem Drei-Phasen-Gedanken und/oder dem besonderen Einsatz von langkettigen sowie kurzkettigen Kohlenhydratkomponenten aus. Es wurde insbesondere erkannt, dass Kohlenhydrat- und Sauerstoffaufnahme ausgewogen aufeinander abgestimmt werden sollten. Dies wird mit nur wenigen Komponenten durch das vorliegende Sportgetränk erreicht.

In verschiedenen Weiterbildungen liegt in dem Sportgetränk mindestens ein Monosaccharid, insbesondere Glucose und/oder Fructose, vor. Weiterhin kann alternativ oder zusätzlich mindestens ein Disaccharid, insbesondere Saccharose, enthalten sein. Weiterhin kann zusätzlich oder alternativ mindestens ein Oligosaccharid vorhanden sein. In diesem Zusammenhang soll unter Oligosaccharid insbesondere ein Kohlenhydrat verstanden werden, das aus 2 bis 10 Monosaccharid-Einheiten aufgebaut ist, insbesondere aus zwei bis fünf Monosaccharid-Einheiten. Entsprechend soll es sich bei einer kurzkettigen Kohlenhydratkomponente vorzugsweise um eine Kohlenhydratkomponente handeln, die aus 1 bis 10 Monosaccharid-Einheiten, vorzugsweise 1 bis 5 Monosaccharid-Einheiten aufgebaut ist. In Abgrenzung dazu soll es sich bei der "langkettigen Kohlenhydratkomponente" bzw. bei Polysacchariden um ein Saccharid handeln, das vorzugsweise mehr als 10 Monosaccharid-Einheiten aufweist, insbesondere mehr als 100 Monosaccharid-Einheiten, weiter vorzugsweise mehr als 1.000 Monosaccharid-Einheiten.

Insgesamt dienen die Mono-, Di- und Oligosaccharide zur (schnellen) Regeneration und Energiebereitstellung während der sportlichen Betätigung. Es hat sich gezeigt, dass mit einen Mono-, Di- oder Oligosaccharid besonders viel Energie pro Zeiteinheit vom Körper aufgenommen werden kann.

Als langkettige Kohlenhydratkomponente kommt vorzugsweise Maltodextrin zum Einsatz. Maltodextrin kann bei guter Verträglichkeit besonders einfach zeitverzögert aufgeschlossen und anschließend resorbiert werden.

Das Sportgetränk bzw. das Pulver oder Konzentrat zum Anrühren eines solchen weist insbesondere die folgenden Inhaltstoffe auf:
- Glucose, insbesondere in einem Anteil von 70 % - 85 %, vorzugsweise 78 % und/oder
- Fructose, insbesondere in einem Anteil von 28 % - 34 %, vorzugsweise 31 % und/oder
- Saccharose, insbesondere in einem Anteil von 35 % - 47 %, vorzugsweise 41 % und/oder
- Maltodextrin, insbesondere in einem Anteil von 1,0 % - 2,2 %, vorzugsweise 1,6 % und/oder
- Biotin, insbesondere in einem Anteil von 0,00010 % - 0,00022 %, vorzugsweise 0,00016 % und/oder
- Calcium, insbesondere in einem Anteil von 0,350 % - 1,1 %, vorzugsweise 0,84 % und/oder
- Chlorid, insbesondere in einem Anteil von 0,4 % - 0,9 %, vorzugsweise 0,66 % und/oder
- Folsäure, insbesondere in einem Anteil von 0,0004 % - 0,0009 %, vorzugsweise 0,00066 % und/oder
- Kalium, insbesondere in einem Anteil von 0,7 % - 1,3 %, vorzugsweise 1 % und/oder
- Magnesium, insbesondere in einem Anteil von 0,2 % - 0,5 %, vorzugsweise 0,38 % und/oder
- Natrium, insbesondere in einem Anteil von 0,8 % - 1,6 %, vorzugsweise 1,2 % und/oder
- Niacin, insbesondere in einem Anteil von 0,03 % - 0,08 %, vorzugsweise 0,053 % und/oder
- Pantothensäure (Vitamin B5), insbesondere in einem Anteil von 0,01 %-0,03 %, vorzugsweise 0,02 % und/oder
- Phosphor, insbesondere in einem Anteil von 0,5 % - 0,9 %, vorzugsweise 0,7 % und/oder
- Vitamin A (Provitamin A), insbesondere in einem Anteil von 0,0003 %-0,0007 %, vorzugsweise 0,00053 % und/oder
- Vitamin B1, insbesondere in einem Anteil von 0,002 % - 0,005 %, vorzugsweise 0,0037 % und/oder
- Vitamin B12, insbesondere in einem Anteil von 0,000006 % - 0,00001 %, vorzugsweise 0,0000085 % und/oder
- Vitamin B2, insbesondere in einem Anteil von 0,003 % - 0,006 %, vorzugsweise 0,0046 % und/oder
- Vitamin B6, insbesondere in einem Anteil von 0,003 % - 0,006 %, vorzugsweise 0,0046 % und/oder
- Vitamin C, insbesondere in einem Anteil von 0,2 % - 0,35 %, vorzugsweise 0,27 % und/oder
- Vitamin E, insbesondere in einem Anteil von 0,03 % - 0,05 %, vorzugsweise 0,06 %.

Durch die vorgeschlagene Zusammensetzung wird insgesamt während allen drei Phasen einer sportlichen Betätigung eine ausgewogene Nährstoff- bzw. Wirkstoffzufuhr realisiert. Insbesondere die B-Vitamine (z.B. Vitamin B1 und/oder Vitamin B6) wirken dabei als Kohlenhydratresorptionsverstärker. Vitamin B1 erhöht die Energie, die den Zellen des Sportlers zur Verfügung steht. Der Energiestoffwechsel wird verbessert. Bei Vitamin B6 wird insbesondere der Glycogenstoffwechsel sowie der Fettstoffwechsel verbessert.

Bei den %-Angaben handelt es sich um Gew.-%-Angaben bezogen auf das Gesamtgewicht des Getränks (oder Pulvers oder Konzentrats zum Anrühren eines solchen) ohne Berücksichtigung von Wasser.

Die oben genannte Aufgabe wird weiterhin gelöst durch ein Verfahren zur Verabreichung eines Sportgetränks der oben beschriebenen Zusammensetzung an einen Sportler, umfassend die Schritte:

Verabreichen einer ersten Portion (vorzugsweise 30 bis 60 min) vor der sportlichen Belastung derart, dass die Mineralstoffe zu Beginn der sportlichen Belastung (im Wesentlichen) resorbiert sind, Verabreichen einer zweiten Portion während der sportlichen Belastung derart, dass eine ausreichende Energieversorgung sichergestellt ist, und Verabreichen einer dritten Portion nach der sportlichen Belastung zur Wiederauffüllung des Kohlenhydrat- und Mineralstoffspeichers für eine optimierte Regeneration. Dieses Verfahren zeichnet sich dadurch aus, dass das Sportgetränk in allen drei Phasen in Zusammenhang mit der sportlichen Betätigung optimiert zum Einsatz kommt. Dadurch wird der organisatorische und logistische Aufwand des Sportlers reduziert.

Nachfolgend werden die charakteristischen Werte eines Ausführungsbeispiels des Sportgetränks gemäß der Erfindung angeführt.

Ausgehend von einer 500 ml Portion (30 g Inhaltsstoffe ohne Berücksichtigung von Wasser) gibt folgende Tabelle vorteilhafte Mengenwerte der einzelnen Inhaltsstoffe an. Bereiche innerhalb derer die jeweilige Substanz variiert werden kann, sind nicht angegeben, können jedoch auf einfache Weise aus den obigen Prozentangaben berechnet werden. Neben den angegebenen Substanzen können noch weitere Substanzen enthalten sein, die beispielweise der Aromatisierung und/oder der Löslichkeit von einzelnen Inhaltsstoffen dienen.

| Inhaltsstoff | | Menge in einer 30 g-Einheit (500 ml des Getränks) |
|---|---|---|
| Eiweiß | | < 0,1 g |
| Kohlenhydrate | | 24 g |
| | davon Zucker | 23,5 g |
| | davon Traubenzucker | 9,2 g |
| | davon Fructose | 2,0 g |
| | davon Saccharose | 12,3 g |
| | davon Maltodextrin | 0,5 g |
| Fett | | < 0,1 g |
| Biotin | | 50 µm |
| Calcium | | 252 mg |
| Chlorid | | 200 mg |
| Folsäure | | 200 µm |
| Kalium | | 300 mg |
| Magnesium | | 114 mg |
| Natrium | | 0,35 g |
| Niacin | | 16 mg |
| Pantothensäure (Vitamin B5) | | 6 mg |
| Phosphor | | 210 mg |
| Vitamin A (Provitamin A) | | 160 µm |
| Vitamin B1 | | 1,1 mg |
| Vitamin B12 | | 2,5 µg |
| Vitamin B2 | | 1,4 mg |
| Vitamin B6 | | 1,4 mg |
| Vitamin C | | 80 mg |
| Vitamin E | | 12 mg |

Durch die B-Vitamine (insbesondere Vitamin B1 und B6) wird insbesondere die Kohlenhydrataufnahme durch die Körperzelle des Sportlers verbessert. Durch das Vitamin C und E wird insbesondere ein Antioxidationsmittel zur Verfügung gestellt, das das Immunsystem des Sportlers stärkt. Die Mineralstoffe dienen vorzugsweise der Versorgung des Sportlers während der sportlichen Betätigung (insbesondere durch Aufnahme in der ersten Phase) und zur Regeneration nach der sportlichen Betätigung (also zur Aufnahme während der dritten Phase).

Weitere Ausführungsformen ergeben sich aus den Unteransprüchen.

## Patentansprüche

1. Sportgetränk, umfassend mindestens eine erste kurzkettige Kohlenhydratkomponente zur schnellen Resorption, insbesondere im Dünndarm, zur schnellen Regeneration und Energiebereitstellung während der sportlichen Betätigung, und mindestens eine langkettige Kohlenhydratkomponente zur verzögerten Bereitstellung und Resorption mindestens einer zweiten kurzkettigen Kohlenhydratkomponente, insbesondere im Dickdarm.

2. Sportgetränk nach Anspruch 1,
**dadurch gekennzeichnet, dass** ein Verhältnis des Gesamtgewichtes der einen oder der mehreren ersten kurzkettigen Kohlenhydratkomponenten zu dem Gesamtgewicht der einen oder der mehreren langkettigen Kohlenhydratkomponenten 1:10 bis 1:100, vorzugsweise 1:40 bis 1:60, insbesondere (etwa) 1:50, beträgt.

3. Sportgetränk, oder Pulver bzw. Konzentrat zum Anrühren eines solchen, nach einem der vorhergehenden Ansprüche,
**dadurch gekennzeichnet, dass**
erste und zweite kurzkettige Kohlenhydratkomponente identisch sind.

4. Sportgetränk, oder Pulver bzw. Konzentrat zum Anrühren eines solchen, nach mindestens einem der vorhergehenden Ansprüche, insbesondere nach Anspruch 3, **gekennzeichnet durch** ein Verhältnis des Gewichtes der ersten kurzkettigen Kohlenhydratkomponente zu dem Gewicht einer langkettigen Kohlenhydratkomponente, **durch** die eine zur ersten Komponente identische zweite Kohlenhydratkomponente bereitgestellt wird, von 1:5 bis 1:40, vorzugsweise 1:15 bis 1:25, insbesondere (etwa) 1:20.

5. Sportgetränk, oder Pulver bzw. Konzentrat zum Anrühren eines solchen, nach einem der vorhergehenden Ansprüche, zur Aufnahme in einer ersten Phase vor der sportlichen Betätigung, in einer zweiten Phase während der sportlichen Betätigung und in einer dritten Phase nach der sportlichen Betätigung, umfassend
eine Vielzahl von Mineralien, und ggf. Vitaminen, sowie mindestens ein immunsystemunterstützendes Mittel, insbesondere mindestens ein Antioxidationsmittel, zur Resorption während der ersten und dritten Phase, und
mindestens ein Kohlenhydrat zur Resorption insbesondere während der zweiten Phase sowie mindestens einen Kohlenhydratresorptionsverstärker zur Steigerung der Kohlenhydratresorption.

6. Sportgetränk, oder Pulver bzw. Konzentrat zum Anrühren eines solchen, nach einem der vorhergehenden Ansprüche, **gekennzeichnet durch** einen Sauerstoffaufnahmeverstärker, insbesondere ein Algenpulver, zur Verbesserung der Sauerstoffaufnahme.

7. Sportgetränk, oder Pulver bzw. Konzentrat zum Anrühren eines solchen, nach einem der vorhergehenden Ansprüche, **gekennzeichnet durch** mindestens ein Monosaccharid, insbesondere Glucose und/oder Fructose, und/oder mindestens ein Disaccharid, insbesondere Saccharose, und/oder mindestens ein Oligosaccharid zur schnellen Regeneration und Energiebereitstellung während der sportlichen Betätigung.

8. Sportgetränk, oder Pulver bzw. Konzentrat zum Anrühren eines solchen, nach einem der vorhergehenden Ansprüche,
**dadurch gekennzeichnet, dass**
die mindestens eine langkettige Kohlenhydratkomponente Maltodextrin ist.

9. Sportgetränk, oder Pulver bzw. Konzentrat zum Anrühren eines solchen, nach einem der vorhergehenden Ansprüche, **gekennzeichnet durch**
- Glucose, insbesondere in einem Anteil von 70 % - 85 %, vorzugsweise 78 % und/oder
- Fructose, insbesondere in einem Anteil von 28 % - 34 %, vorzugsweise 31 % und/oder
- Saccharose, insbesondere in einem Anteil von 35 % - 47 %, vorzugsweise 41 % und/oder
- Maltodextrin, insbesondere in einem Anteil von 1,0 % - 2,2 %, vorzugsweise 1,6 % und/oder
- Biotin, insbesondere in einem Anteil von 0,00010 % - 0,00022 %, vorzugsweise 0,00016 % und/oder
- Calcium, insbesondere in einem Anteil von 0,350 % - 1,1 %, vorzugsweise 0,84 % und/oder
- Chlorid, insbesondere in einem Anteil von 0,4 % - 0,9 %, vorzugsweise 0,66 % und/oder
- Folsäure, insbesondere in einem Anteil von 0,0004 % - 0,0009 %, vorzugsweise 0,00066 % und/oder
- Kalium, insbesondere in einem Anteil von 0,7 % - 1,3 %, vorzugsweise 1 % und/oder
- Magnesium, insbesondere in einem Anteil von 0,2 % - 0,5 %, vorzugsweise 0,38 % und/oder
- Natrium, insbesondere in einem Anteil von 0,8 % - 1,6 %, vorzugsweise 1,2 % und/oder
- Niacin, insbesondere in einem Anteil von 0,03 % - 0,08 %, vorzugsweise 0,053 % und/oder
- Pantothensäure (Vitamin B5), insbesondere in einem Anteil von 0,01 %-0,03 %, vorzugsweise 0,02 % und/oder
- Phosphor, insbesondere in einem Anteil von 0,5 % - 0,9 %, vorzugsweise 0,7 % und/oder
- Vitamin A (Provitamin A), insbesondere in einem Anteil von 0,0003 %-0,0007 %, vorzugsweise 0,00053 % und/oder
- Vitamin B1, insbesondere in einem Anteil von 0,002 % - 0,005 %, vorzugsweise 0,0037 % und/oder
- Vitamin B12, insbesondere in einem Anteil von 0,000006 % - 0,00001 %, vorzugsweise 0,0000085 % und/oder
- Vitamin B2, insbesondere in einem Anteil von 0,003 % - 0,006 %, vorzugsweise 0,0046 % und/oder
- Vitamin B6, insbesondere in einem Anteil von 0,003 % - 0,006 %, vorzugsweise 0,0046 % und/oder
- Vitamin C, insbesondere in einem Anteil von 0,2 % - 0,35 %, vorzugsweise 0,27 % und/oder
- Vitamin E, insbesondere in einem Anteil von 0,03 % - 0,05 %, vorzugsweise 0,06 %,
wobei die %-Angaben Gew.-%-Angaben bezogen auf das Gesamtgewicht ohne Berücksichtigung von Wasser sind.

10. Verfahren zur Verabreichung eines Sportgetränkes nach einem der vorhergehenden Ansprüche an einen Sportler umfassend die Schritte:
Verabreichen einer ersten Portion, vorzugsweise 30 bis 60 min., vor der sportlichen Belastung derart, dass die Mineralstoffe zu Beginn der sportlichen Belastung (im Wesentlichen) resorbiert sind,
Verabreichen einer zweiten Portion während der sportlichen Belastung derart, dass eine ausreichende Energieversorgung sichergestellt ist, und
Verabreichen einer dritten Portion nach der sportlichen Belastung zur Wiederauffüllung des Kohlenhydrat- und Mineralstoffspeichers für eine optimierte Regeneration.
